# EUROPEAN PATENT APPLICATION

(11) **EP 2 157 745 A1**
(43) Date of publication of application: **24.02.2010**
(21) Application number: 08014705.1
(22) Date of filing: 19.08.2008
(51) Int. Cl.: H04L 12/56

(54) **Method for routing data traffic in an access node and access node**

(71) Applicant: Nokia Siemens Networks OY, 02610 Espoo (FI)
(72) Inventor: Schmidtke, Uwe, 17493 Greifswald (DE)
(74) Representative: Bruglachner, Thomas E.

(57) **Abstract**

A method for routing data traffic in an access node is provided, wherein said access node comprises at least one decentralized component that maps routing functions to subscriber interfaces and/or services and a centralized component comprising a control plane for controlling the at least one decentralized component. Furthermore, an access node is suggested accordingly.

## Description

The invention relates to a method for routing data traffic in an access node and to an access node.

Access Networks provide interfaces for the end users via so-called Access Nodes (AN). In particular an IP Digital Subscriber Line Access Multiplexer (DSLAM) supplies various user interfaces, e.g., Digital Subscriber Line (xDSL), Plain Old Telephone Service (POTS a/b) or Ethernet. An alternative Access Node refers to a Passive Optical Network (PON) comprising Optical Line Termination (OLT) and Optical Network Termination (ONT) including the Gigabit Passive Optical Network Technology (GPON).

Interfaces to subscribers may comprise various interface technologies and/or solutions, e.g., Ethernet being connected to an optical fiber thereby providing a fiber-to-the-home (FTTH) approach. An alternative is utilizing xDSL as an access interface based on copper wires: The subscriber can in such a scenario be connected via existing wires to a DSLAM located in the Central Office (CO) or nearer to the customer as an fiber-to-the-building (FTTB) or fiber-to-the-curb (FTTC) approach.

The access interfaces may also comprise connections to analogue (or digital) telephone services as well as providing TDM services to/from the subscribers.

Network components and/or network nodes providing access interfaces are also referred to as Access Nodes.

Further, according to the OSI Model (Open Systems Interconnection Basic Reference Model), a Network Layer (also referred to as layer-3) provides the functional and procedural means of transferring variable length data sequences from a source to a destination via one or more networks while maintaining the quality of service requested by the Transport layer. The Network layer performs network routing functions, and might also perform fragmentation and reassembly, and report delivery errors. Routers operate at this layer - sending data throughout the extended network thereby providing different services like, e.g., Internet services, Video on demand, Broadcast TV or Voice over IP service to the subscribers.

An Access Node comprising a layer-3 routing function has to provide the forwarding information as result of a layer-3 lookup based on the Layer 3 address key called IP address.

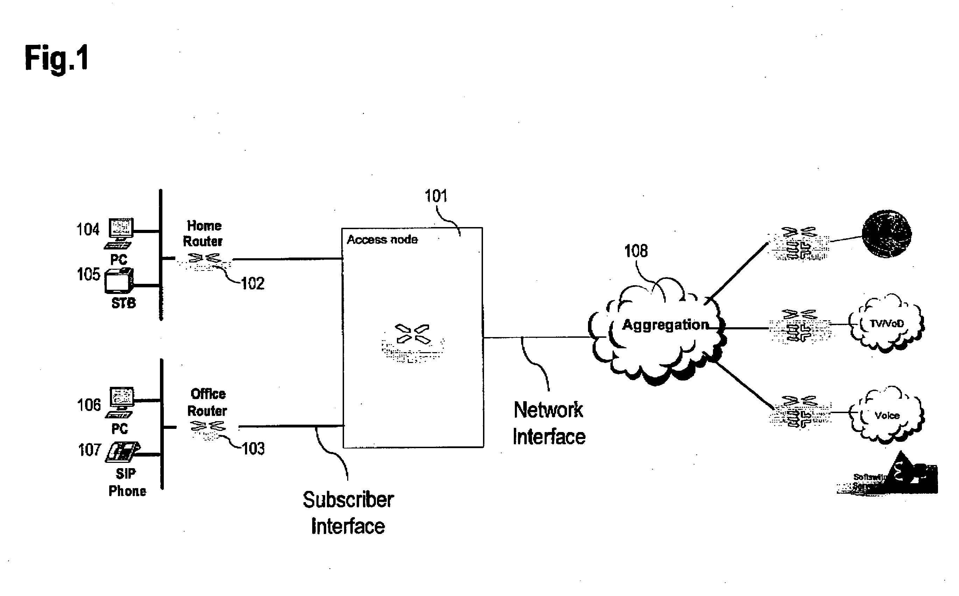

**Fig.1** shows an Access Node 101 connected to a Home Router 102 and to an Office Router 103. The Home Router 102 is further connected to a PC 104 and to a Set-Top Box STB 105, the Office Router 103 is further connected to a PC 106 and to an SIP Phone 107. In uplink direction the Access Node 101 is connected via an optional Aggregation 108 with, e.g., the Internet and/or TV, Video on Demand or Voice Server.

A routing function towards subscriber 104 to 107 is employed within the Access Node 101 directing traffic from the Aggregation 108 to the respective address. Such routing function is based on the IP address of the respective subscriber 104 to 107.

Routing is referred to as conveying packets based on an address information preferably provided by an IP header. The IP header is associated with layer-3 information according to OSI.

Each connection of the Access Node with the various subscribers may be considered a point-to-point connection. This applies in particular for each service supplied. Hence, the several point-to-point connections between the subscribers (104 to 107 according to Fig.1) and the Access Node need to be processed at the Access Node towards the network interface.

Regarding the GPON case, interworking with layer-2 of the PON (in particular with a GPON Transmission und Convergence (GTC) layer, see ITU-T Rec. G.984.3 (02/2004)) is required in order to provide correct routing services.

Thus, the Access Network comprising layer-3 routing may comprise a look-up process to identify the subscribers address, in particular an IP lookup to reveal the a forwarding information. It is noted that the subscriber's address may also be an address assigned or related to a service (at or for a particular subscriber). Thus, the Access Network can be considered as a combined routing function. From an outside perspective, such Access Network appears as a black box deciding which traffic (data packet) to convey via which subscriber (or service) interface. Such decision appears to be made solely based on layer-3 information provided by the IP header.

In opposite direction, the Access Network needs to ensure that the IP address assigned is merely used as the correct source address for the respective subscriber (IP anti-spoofing).

In a distributed system (which applies for most access systems), several bridging stages are connected in series, each stage requiring a separate lookup to be processed. In case of a GPON, an additional connection to a GPON transmission and convergence (TC) layer is required as the PON conveys information regarding traffic flow encapsulated within such TC layer. The GPON TC layer is located within layer-2 as is Ethernet according to OSI. Thus, routing provided by layer-3 needs interworking with layer-2, in particular with said TC layer.

From the outside perspective, the Access Network needs to provide routing not only based on a path to choose in each switching stage, but similarly choosing the traffic flow across the PON.

These approach leads to significant problems regarding in particular a scalability of routing tables based on an increasing number of subscribers to be connected (directly or indirectly) via GPONs.

As it is often an requirement that each subscriber needs to be directly addressable via layer-3 lookup, unambiguous host IP addresses are needed (e.g., comprising a prefix "32"). This results in an entry for each subscriber in a Forwarding Information Base (FIB). For example, a GPON with currently 56 GPON links (extensions are planned) and up to 64 (or 128 as standardized) ONTs per GPON link in combination with several ports per ONT leads to a huge number of subscribers per OLT. Multiplied by the number of services that require a termination on their own this results in routing tables with more than 10.000 entries, which would go beyond the scope of today's tables as used in layer-3 components within the Access Node. Hence, existing Access Nodes either cannot cope with such large routing tables or different components need to be provided which would significantly increase the cost of the Access Node.

The problem to be solved is to overcome the disadvantages stated above and in particular to provide an improved approach to efficiently cope with a huge number of subscribers.

This problem is solved according to the features of the independent claims. Further embodiments result from the depending claims.

In order to overcome this problem, a method for routing data traffic in an access node is provided, wherein said access node comprises
- at least one decentralized component that maps routing functions to subscriber interfaces and/or services and
- a centralized component comprising a control plane for controlling the at least one decentralized component.

The access node may in particular comprise or be associated with components of an optical network or an IP DSLAM. Advantageously, the routing functions are distributed among several decentralized components, in particular interface cards, each of which being responsible for mapping routing functions to subscriber interfaces and/or services, and thus in particular for providing routing services.

Advantageously, the approach allows assigning IP addresses out of a user-defined pool of IP subnetworks within the Access Node. Thus, the internal structure of the Access Node is no restriction with regard to an IP addressing scheme. Accordingly, the provider can efficiently make use of his pool of available IP addresses.

In an embodiment, the at least one decentralized component comprises a Forwarding Information Base (FIB) and a forwarding engine.

Hence, in particular a layer-3 routing is provided and/or processed based on said FIB and said forwarding engine.

In another embodiment, the at least one decentralized component provides interworking functionality with a GPON TC layer.

In another embodiment, the at least one decentralized component provides interworking functionality with a provider network subscriber interface and/or with an Ethernet layer, comprising in particular IEEE 802.1Q VLAN mapping functions.

In a further embodiment, the at least one decentralized component is an interface card or a line card.

In a next embodiment, the at least one decentralized component is an optical interface card.

It is also an embodiment that the centralized component translates and/or converts information of a Routing Information Base (RIB) into information for the at least one decentralized Forwarding Information Base (FIB) in particular comprising GTC mapping information.

Hence, the centralized component acts as a supervising layer to the at least one decentralized component, wherein the at least one decentralized component comprises the actual routing or mapping information, e.g., actual routing tables for the subscribers and/or services, required.

The problem stated above is also solved by an access node comprising
- at least one decentralized component arranged to map routing functions to subscriber interfaces and/or services and
- a centralized component comprising a control plane for controlling the at least one decentralized component.

It is noted that the centralized component may also comprise a central management plane that allows the access node being perceived as a combined layer-3 router from an outside perspective, i.e. from any other component of the network.

Pursuant to another embodiment, the at least one decentralized component comprises a Forwarding Information Base (FIB) and a forwarding engine.

According to an embodiment, the at least one decentralized component is arranged to provide an interworking functionality with a GPON TC layer.

According to another embodiment, the centralized component is arranged to translate and/or convert information of a Routing Information Base into information for the at least one decentralized Forwarding Information Base in particular comprising GTC mapping information.

In yet another embodiment, the access node further comprises an aggregation stage that is connected to the at least one decentralized component, wherein said aggregation stage in particular is or is associated with a layer-2 aggregation stage.

According to a next embodiment, said access node comprises or is associated with a GPON access network.

Pursuant to yet an embodiment, said access node comprises or is associated with an IP DSLAM access node.

The problem stated above is also solved by a device comprising a and/or being associated with a processor unit and/or a hard-wired circuit and/or a logic device that is arranged such that the method as described herein is executable on said processor unit.

According to an embodiment, the device is a communication device, in particular a or being associated with an access node.

The problem stated supra is further solved by a communication system comprising the device as described herein.

Embodiments of the invention are shown and illustrated in the following figures:
- Fig.2: shows a logical structure of components of a network and how they are linked to one another;
- Fig.3: shows a basic approach of a mapping function between GEM port / PON link of the TC layer and a R-VLAN scheme which can be unambiguously assigned to a sub- scriber port (or service);
- Fig.4: shows a GPON System realized as an Access Node AN comprising an OLT, a PON and several ONTs, wherein said GPON System provides to the network the service of a transparent router.

The approach provided in particular enables the GPON access network comprising ONTs and subscriber interfaces as well as comprising the PON and the OLT to operate as a combined router. This is in particular achieved by combining mapping functions of the TC layer and the forwarding engine by a decentralized structure comprising forwarding engines and associated FIBs as well as a centralized structure comprising a control plane with routing capabilities (in particular comprising routing protocol instances) and a centralized management function.

This complies in particular with the following requirements for the AN regarding a routing functionality to be provided:
- The subscriber interface being arranged with the ONT can be directly addressed by the routing function.
- From a network perspective, the AN acts as a consolidated router.
- The size of the routing tables scale with an increasing number of subscribers that need to be directly addressed by such consolidated router.
- IP addresses of any subnetwork can be assigned to the subscribers irrespective of an inner structure of the AN.

The approach provided allows in particular to meet all the aforementioned requirements.

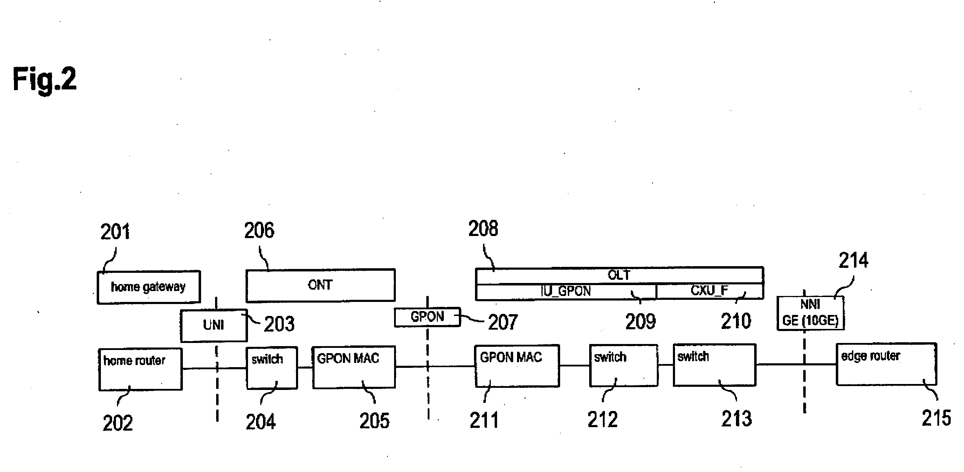

**Fig.2** shows a logical structure of components of a network and how they are linked to one another. A home gateway 201 can be deployed by a home router 202 that is connected via a user interface 203 to a switch 204 and further to a GPON MAC 205. The switch 204 and the GPON MAC 205 can be gathered as ONT 206. Such ONT 206 is connected via GPON interface 207 to an OLT 208 comprising a GPON interface unit 209 and a central card CXU_F 210. The GPON interface unit 209 comprises a GPON MAC 211 and a switch 212 and the central card CXU_F 210 comprises a switch 213.

The OLT 208 is further connected via a network interface 214, e.g., an Ethernet interface, to an edge router 215.

Advantageously, GPON MAC layers are directly coupled to the routing function. As set forth under ITU-T Recommendation G-984.3, the TC layer is enabled to address a traffic flow via a GEM port ID. Said traffic flow may be determined in particular by a subscriber port of the ONT. Hence, if the routing decision is made based on the GEM port ID or based on a group of GEM port IDs, which are unambiguously associated with an ONT port, such result of the routing decision provides or reveals the subscriber port.

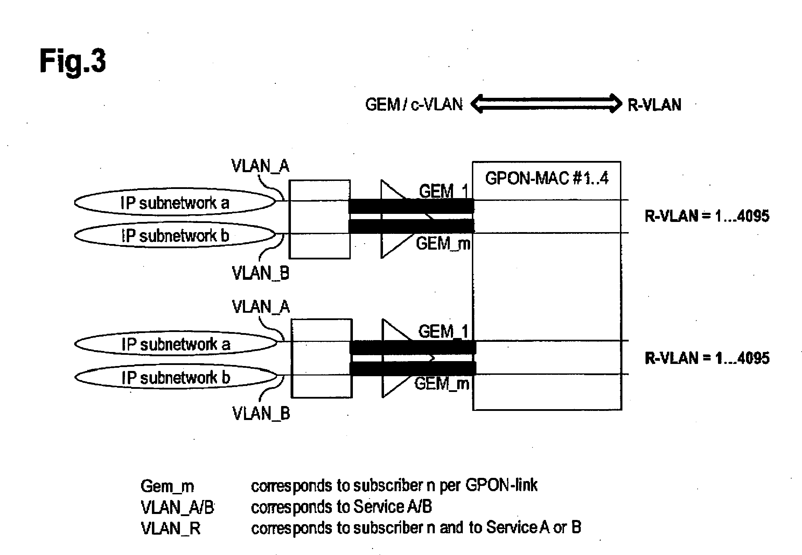

**Fig.3** shows a basic approach of a mapping function between GEM port / PON link of the TC layer and a R-VLAN scheme which can be unambiguously assigned to a subscriber port (or service).

Identification of a subscriber port is processed on a TC layer by a GEM-port ID. This information regarding the subscriber port is used for setting up a unique VLAN, the so-called R-VLAN. In addition, the service is identified by a VLAN-tag that is flagged at the subscriber port or beyond.

For further routing purposes, each R-VLAN constitutes a router port on its own and can be addressed directly at the layer-3-lookup based on the IP address.

Advantageously, the solution suggested overcomes the disadvantage based on using a centralized Routing Information Base (RIB). As discussed above, the AN being used as router some-what excludes an aggregation of subscriber routes or paths into subnetworks, in particular because the Access Network needs to directly address the subscriber (or service). Hence, for each subscriber separate host routes may exist and a centralized FIB would become a bottleneck of the Access system.

In order to solve this issue, the FIB as well as the forwarding engine are moved to decentralized portions of the Access Node. Each decentralized component may just (or in particular at least) have data that is relevant for this particular component. A control plane of the Access Node, however, may remain a centralized portion to provide in particular as a central function. A direct coupling between GPON TC layer and the routing function is preferably also move to the decentralized component. Also a direct coupling between IEEE 802.1Q VLAN mapping functions and the routing function may be provided or associated with the decentralized component.

Advantageously, the control plane may comprise an intermediate layer that translates or converts information of the central RIB into information for the decentralized FIBs including GTC mapping information.

In addition, an internal mapping scheme between the GPON TC layer and Ethernet VLAN may have to be considered accordingly.

Distributing FIB and routing engines may be different from a Virtual Routing (VR) function. The AN may support such VR function. Thus, the management plane, the control plane and the distributed data plane functions may also support such VR functions.

In comparison to a common router, the approach provided in particular supports including subscriber interfaces as a kind of point-to-point connection for each decentralized routing engine.

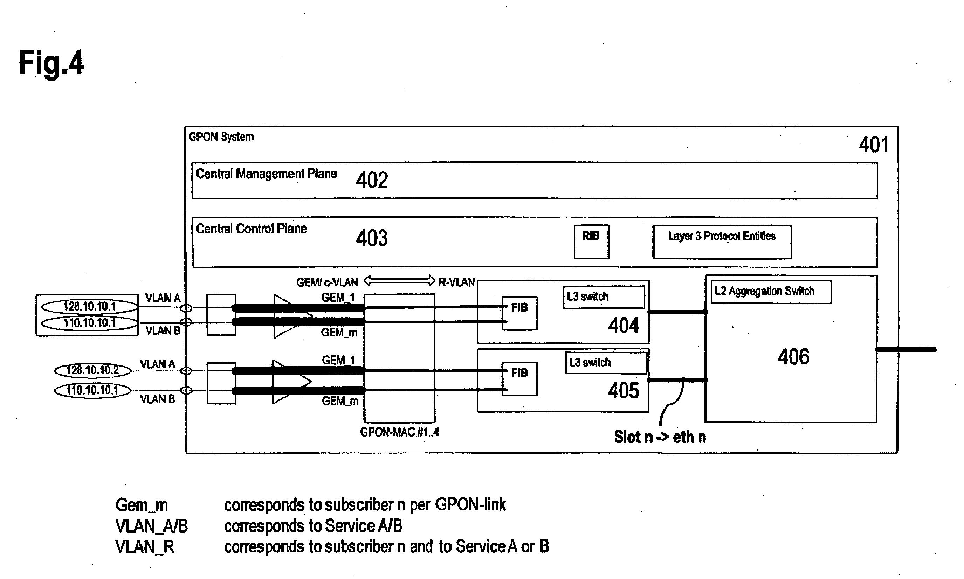

**Fig.4** shows a GPON System 401 realized as an Access Node AN comprising an OLT, a PON and several ONTs. The GPON System 401 provides to the network the service of a transparent router.

The GPON System 401 comprises a Central Management Plane 402 which combines the AN as a logical router. Further, the GPON System 401 comprises a Central Control Plane 402 comprising all routing entities or instances of the logical AN including a centralized routing protocol instance and a centralized RIB.

Subscribers are connected via VLANs ("VLAN A", "VLAN B") to subscriber ports of the GPON System 401. Thus, the IP addresses of the subscribers are converted to GPON links and further converted to R-VLANs, which are fed to decentralized GPON interface cards 404 and 405. The interface cards 404 and 405 each comprise a FIB and a forwarding engine as well as an interworking function towards a GPON TC layer. Hence, each interface card 404 and 405 enables mapping of routing functions to the logical subscriber interfaces.

From the viewpoint of the Central Management Plane 402 and/or the Central Control Plane 403, each subscriber port or service is considered a separate logical layer-3 interface for the whole AN.

The interface cards 404 and 405 are further connected to a central aggregation stage 406. Advantageously, such aggregation stage 406 does not have to provide any routing functionality. It may be a mere layer-2 aggregation stage within the AN.

According to Fig.4, the control plane and the management plane functionalities stretch across the whole combined router constituting the AN in this example. This includes, but is not limited to subscriber interfaces at the ONT, the PON, the mapping function between TC layer and routing function and the network interfaces.

From an external view on the AN, the AN meets the requirement of a combined router linking subscriber interfaces and network interface enabling a direct addressing of the subscriber port per service.

A central stage is hence, according to its functionality, in particular a mere layer-2 aggregation stage. It provides aggregation of all traffic streams to one or several physical uplink interface(s) towards the network. A decentralized routing functionality may be provided by VLANs implemented on the network side as layer-3 interfaces.

As an alternative, the Access Network can be implemented or associated with an IP DSLAM. In such a scenario, the routing stage could be directly coupled with the subscriber interface. Advantageously, the PON stage can be omitted. Similar coupling mechanisms may apply. That coupling function could comprise a mapping function between the Ethernet layer comprising the IEEE 802.1Q VLAN mapping and the routing function.

### Further Advantages:

The approach described allows direct layer-3 addressing of subscriber ports per service. Also, the AN appears as a combined router from the network's perspective.

Advantageously, the centralized aggregation stage does not have to store all host addresses in its FIB. This allows a flexible scaling and thus to meet the requirement of growing access systems. As indicated, such is preferably achieved by distributing the FIB among decentralized interface cards. Hence, by adding another interface card, such interface card also adds (and preferably maintains) its own routing tables.

In addition, the approach provided meets the requirement for efficiently utilizing IP addresses within an access network. The internal structure of the AN is not relevant for the distribution of IP addresses towards IP subnetworks and eventually towards the subscribers. It is thus possible to map the subscriber interfaces as so-called "unnumbered interfaces". This allows using IP addresses taken from the same IP subnetwork for different subscriber interfaces.

It is noted, however, that such centralized aggregation stage as a pure layer-2 stage does not provide any limitation as the subscriber addressing mechanism in downstream direction (directed towards the subscribers) is processed on the access node interface card. Forwarding traffic in upstream direction on layer-2 is then no longer a security issue.

### List of Abbreviations:

- AN: Access Node
- CO: Central Office
- DSL: Digital Subscriber Line
- DSLAM: Digital Subscriber Line Access Multiplexer
- FIB: Forwarding Information Base
- FTTB: Fiber-To-The-Building
- FTTC: Fiber-To-The-Curb
- FTTH: Fiber-To-The-Home
- GEM: GPON Encapsulation Method
- GPON: Gigabit Passive optical Network
- GTC: GPON Transmission und Convergence
- IP: Internet Protocol
- LAN: Local Area Network
- MAC: Media access Control
- OLT Optical: Line Termination
- ONT: Optical Network Termination
- OSI: Open System Interconnection
- PON: Passive Optical Network
- POTS: Plain Old Telephone Service
- RIB: Routing Information Base
- SIP: Session Initiation Protocol
- STB: Set-Top-Box
- TC: Transmission and Convergence
- TDM: Time Division Multiplex
- VLAN: Virtual LAN
- VR: Virtual Routing

## Claims

1. A method for routing data traffic in an access node, wherein said access node comprises
- at least one decentralized component that maps routing functions to subscriber interfaces and/or services and
- a centralized component comprising a control plane for controlling the at least one decentralized component.

2. The method according to claim 1, wherein the at least one decentralized component comprises a Forwarding Information Base (FIB) and a forwarding engine.

3. The method according to any of the preceding claims, wherein the at least one decentralized component provides interworking functionality with a GPON TC layer.

4. The method according to any of the preceding claims, wherein the at least one decentralized component provides interworking functionality with a provider network subscriber interface and/or with an Ethernet layer, comprising in particular IEEE 802.1Q VLAN mapping functions.

5. The method according to any of the preceding claims, wherein the at least one decentralized component is an interface card or a line card.

6. The method according to any of the preceding claims, wherein the at least one decentralized component is an optical interface card.

7. The method according to any of the preceding claims, wherein the centralized component translates and/or converts information of a Routing Information Base into information for the at least one decentralized Forwarding Information Base in particular comprising GTC mapping information.

8. An access node comprising
- at least one decentralized component arranged to map routing functions to subscriber interfaces and/or services and
- a centralized component comprising a control plane for controlling the at least one decentralized component.

9. The access node according to claim 7, wherein the at least one decentralized component comprises a Forwarding Information Base and a forwarding engine.

10. The access node according to any of claims 7 or 8, wherein the at least one decentralized component is arranged to provide an interworking functionality with a GPON TC layer.

11. The access node according to any of claims 8 to 10, wherein the centralized component is arranged to translate and/or convert information of a Routing Information Base into information for the at least one decentralized Forwarding Information Base in particular comprising GTC mapping information.

12. The access node according to any of claims 8 to 11 comprising an aggregation stage that is connected to the at least one decentralized component, wherein said aggregation stage is a layer-2 aggregation stage.

13. The access node according to any of claims 8 to 12, wherein the at least one decentralized component is an interface card or a line card.

14. The access node according to any of claims 8 to 13, wherein said access node comprises or is associated with a GPON access network.

15. The access node according to any of claims 8 to 13, wherein said access node comprises or is associated with an IP DSLAM access node.

16. A device comprising a and/or being associated with a processor unit and/or a hard-wired circuit and/or a logic device that is arranged such that the method according to any of claims 1 to 7 is executable thereon.
